# EUROPEAN PATENT APPLICATION

(11) **EP 1 133 120 A2**
(43) Date of publication of application: **12.09.2001**
(21) Application number: 01105379.0
(22) Date of filing: 09.03.2001
(51) Int. Cl.: H04L 12/64

(54) **Control data system and control data transmission method**

(30) Priority: 10.03.2000 JP 2000066213
(71) Applicant: VICTOR COMPANY OF JAPAN LIMITED, Yokohama-Shi Kanagawa-Ken (JP)
(72) Inventor: Shinyagaito, Tatsuya, Yokohama-shi, Kanagawa-ken (JP)
(74) Representative: HOFFMANN - EITLE

(57) **Abstract**

Controllable units such as a television set (3) or a playback unit (4) are connected to a home network (2). A gateway (6) connects the home network (2) with the Internet (7) and, at the same time, forwards externally-supplied data to the home network (2). A portable terminal (8) sends HTML data for controlling controllable units and allows a user to browse HTML data sent from the gateway (6), either via a wireless data communication line at home or via the Internet (7) away from home.

## Description

### BACKGROUND OF THE INVENTION

### 1. Field of the Invention

The present invention relates to a control data system and a control data transmission method which allow a user to browse contents data, accumulated in a gateway, with a portable terminal capable of remotely operating, via the gateway, controllable units such as home electrical units connected to a home network.

### 2. Description of the Related Art

A system capable of centrally controlling units with a controller is proposed in which a communication line (bus) is installed internally (in a home) and the controller and home electrical units are connected to the communication line. This system allows the user to control a home electrical unit connected to the communication line but installed in a remote location, such as in another room, simply by operating the controller. The user can also control a home electrical unit away from home (outside the home) by connecting the controller to a phone line.

The communication line described above may be built using a transmission line conforming, for example, to IEEE 1394. The IEEE 1394 standard defines the specifications for AVC commands suitable for controlling audio/visual (AV) units and the specifications for a unique set of commands for controlling various types of electronic unit. Conventionally, electronic units (with control terminals) connected to an IEEE-1394-conforming transmission line have been controlled by running a special software program, which has this command set, on an intelligent unit such as a PC (Personal computer). Electronic units controlled in this way have special control terminals via which an external unit controls the electronic units.

In addition, a PC software program, an Internet terminal, and a TV set with the Internet access function have a WWW (World Wide Web) browser, which allows the user to browse HTML(Hyper Text Markup Language)-written page data via the HTTP(Hyper Text Transfer Protocol). They are widely used for accessing the Internet.

On the other hand, the Internet WWW browse function is widely used as one of personal computer functions, and more and more electronic units such as TV sets have the Internet WWW access function. On the Internet WWW, a lot of useful information, for example, a list of TV programs, is provided for home users. However, controlling an electronic unit with the use of information from the Internet, for example, setting a video tape recorder while referring to a list of programs available on the WWW, requires the user to execute two steps of operation. The first step is to access the WWW server, installed outside the home, with the WWW browser to obtain information such as a list of programs, and the second step is to use a special software program to set the video tape recorder. The WWW browser and the special software program used in those steps are separate programs, making the operation complicated.

One solution to this problem is to include the WWW server function into ahome electronic unit to allow the user to control electronic units via a unit such as a personal computer or an Internet TV which has the WWW browse function. This enables the user to control the home electronic unit the same way (via the same user interface) the user accesses the Internet. Also, to access external (outside the home) data, an electronic unit and its control method are disclosed, for example, in Japanese Patent Laid-Open Publication No. Hei 10-191463, in which a gateway unit is installed for interfacing external data (outside the home) with internal data (in the home). The disclosed method allows the user to treat external data (outside the home) the same way the user treats internal data (in the home).

The electronic unit and its control method disclosed in Japanese Patent Laid-Open Publication No. Hei 10-191463 are for controlling the operation of units (home electrical units, etc.) connected to a home network (in the home) but not for controlling internal units (in the home) from an external unit (outside the home). There has been a need for an operating environment in which the user can perform operation externally (outside the home) the same way the user can perform operation internally (in the home).

### SUMMARY OF THE INVENTION

It is an object of the present invention to provide an environment in which a portable terminal, which allows the user not only to control home electrical units in the home but also browse contents data accumulated in the home electrical units, makes the user feel as if he or she was at home even when he or she is away from home.

To achieve the above object, there is provided a control data system comprising a home network; at least one controllable unit connected to the home network and remotely controlled by control data transmitted via the home network; a gateway at least comprising a connection unit connecting the home network to the Internet; a forwarding unit forwarding externally-supplied data to the home network; and a first home network connection unit communicating data via a wireless data communication line; and a portable terminal comprising a second home network connection unit for wireless data communication with the first home network connection unit; a control data transmission function for transmitting control data for controlling the controllable unit; and a browse function for browsing HTML data transmitted from the gateway, wherein the control data and the HTML data are transmitted via the wireless data communication line when the data communication is established between the first home network connection unit and the second home network connection unit or via the Internet when the data communication is not established between the first home network connection unit and the second home network connection unit.

In a preferred embodiment of the present invention, the gateway further comprises accumulation means for accumulating externally-supplied program data or contents and wherein the portable terminal browses HTML data on the program data or contents accumulated in the accumulation means via the home network or the Internet for controlling the controllable unit with the control data.

In a preferred embodiment of the present invention, the portable terminal has a function for monitoring a presence of a nearby gateway via wireless communication and, when the portable terminal requests a connection to the gateway in which the portable terminal is not registered as a format user, the gateway allows the portable terminal to connect to the home network as a guest which may execute only limited services.

In a preferred embodiment of the present invention, the controllable unit has a WWW server function transmitting control code for controlling operation and wherein the portable terminal has a control data transmission function transmitting control data for controlling the controllable unit based on the control code received from the WWW server function.

To achieve the above object, there is provided a method for transmitting control data among at least one controllable unit, a gateway, and a portable terminal interconnected via a home network, wherein control data for controlling the controllable unit is transmitted, and HTML data from the gateway is browsed, either via wireless data communication line when data communication is established between the gateway and the portable terminal or via the Internet in a location where data communication is not establishedbetween the gateway and the portable terminal.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a diagram showing the configuration of an embodiment according to the present invention.
FIG.2 is a diagram showing an example of a gateway.
FIG.3 is a diagram showing an example of a portable terminal.
FIG.4 is a diagram showing how the portable terminal is used in another home network.
FIG.5 is a diagram showing an example of the display screen of the portable terminal which gets control data for controlling a playback unit.
FIG.6 is a diagram showing data transferred between the portable terminal and the playback unit.
FIG.7 is a diagram showing another example of the display screen of the portable terminal which controls the playback unit.
FIG.8 is a diagram showing data transferred between the portable terminal and the playback unit.
FIG.9 is a diagram showing an example of the display screen used when video setting data of the playback unit is entered from the portable terminal.
FIG.10 is a diagram showing an example of a WWW server contained in the playback unit.

### DESCRIPTION OF THE PREFERRED EMBODIMENTS

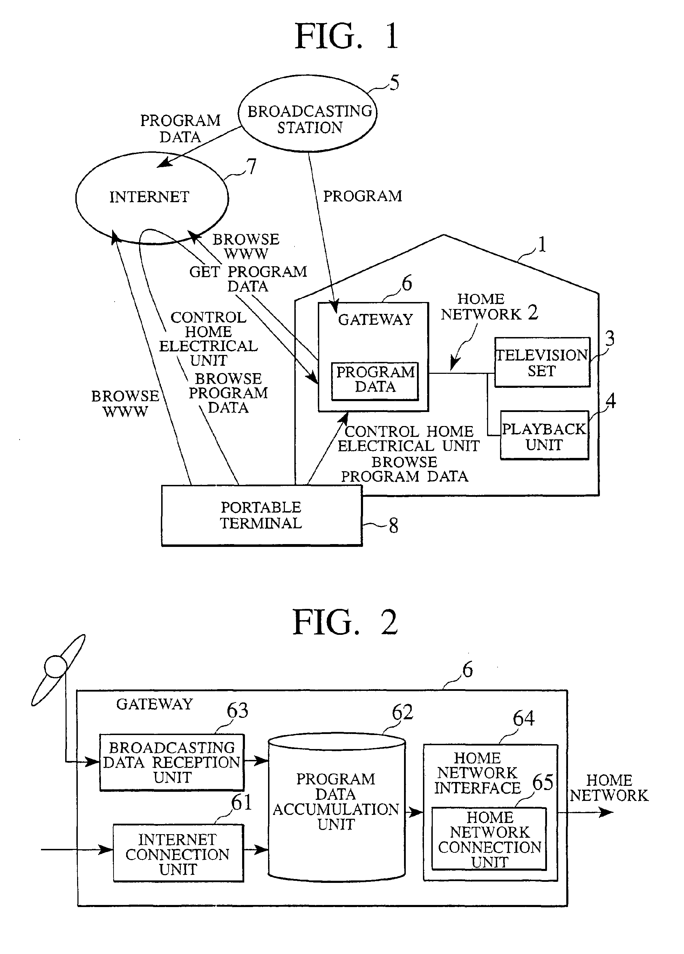

FIG.1 is a diagram showing the configuration of an embodiment of the present invention. In a home 1, a home network 2 is built, for example, according to the specifications of IEEE 1394 or Ethernet. A television set 3 and a playback unit 4 are connected to the home network 2. A broadcasting station 5 broadcasts a program of contents data (video and audio signals) digitized by an encoding method such as MPEG. The home 1 receives broadcast programs via a gateway 6, converts them to a predetermined data format transmittable to the home network 2, and forwards them for output to the home network. The television set 3, playback unit 4, and gateway 6 have their own addresses. An example of this address is a private address included in an IP address used for the Internet.

Digital video signals and so on compressed, for example, by MPEG, are sent to the home network 2. The television set 3, with a function to decode signals supplied from the home network 2, displays decoded video signals and audio signals so that the user can enjoy them. A unit capable of recording MPEG streams, when used as the playback unit 4, can record MPEG stream data supplied from the home network 2. As the playback unit 4, a digital VTR which uses magnetic tapes as a recording medium, and a hard disk drive or a DVD-RW drive which uses magnetic disks, optical discs, or magneto-optic disks as a recording medium may be connected.

The television set 3 and the playback unit 4 need not be separate but may be integrated into one unit. Hardware and software may also be built into a PC (Personal Computer) to implement these units. The television set 3 and the playback unit 4 have one or both of two functions: one is the WWW server function which sends HTML data including control codes for controlling operation and the other is the WWW browse function which allows the user to access HTML data. For example, the playback unit 4 has the WWW server function that sends HTML-format screen data indicating the playback unit status or setting. More specifically, for a video setting screen, the playback unit 4 sends HTML-format screen data for prompting the user to enter setting information such as a date, time of day, and channel. A user who receives this data can view this screen with a WWW browser. The playback unit 4 also displays the current operation status or sends reproduced still or moving images in a predetermined format to allow a user, who receives this data, to display the unit status image or contents image with a WWW browser.

The television set 3, with at least the WWW browse function installed therein, allows the user to confirm and browse the above-described setting data, unit status, and contents. At the same time, the user can connect to the Internet 7 via the home network 2 and the gateway 6, and use the browse function to browse data from external servers using the same user interface. In addition, the user can send commands for controlling the television set 3 and the playback unit 4 connected to the home network 2 to control the operation of these units.

FIG.2 is a diagram showing the configuration of the gateway 6. The gateway 6 has an Internet connection unit 61 which executes the function to connect to the Internet 7. This function keeps the gateway constantly connected to the Internet 7 via, for example, a CATV line. Also, the gateway regularly obtains program data, which is supplied from the broadcasting station 5 to the Internet 7, and accumulates it in a program data accumulation unit 62. When the broadcasting station 5 supplies program data as a part of digital broadcasting data, the gateway can extract the program data from the broadcasting data received by a broadcasting data reception unit 63 and accumulate the extracted data in the program data accumulation unit 62.

The program data accumulation unit 62 may also contain content data, such as programs transmitted via the Internet connection unit 61 or the broadcasting data reception unit 63. Accumulated program data and contents data are converted by a home network interface (I/F) 64 into a format which may be browsed by a WWW browser. The converted data is output to the home network 2. The home network interface 64 comprises a home network connection unit 65 provided for wireless data communication with the portable terminal 8. When the portable terminal 8 which will be detailed later is connected to the home network connection unit 65 via a wireless connection such as Bluetooth, the user can control the television set 3 or the playback unit 4 connected to the home network 2. The user can also browse program data or contents stored in the playback unit 4 or the program data accumulation unit 62.

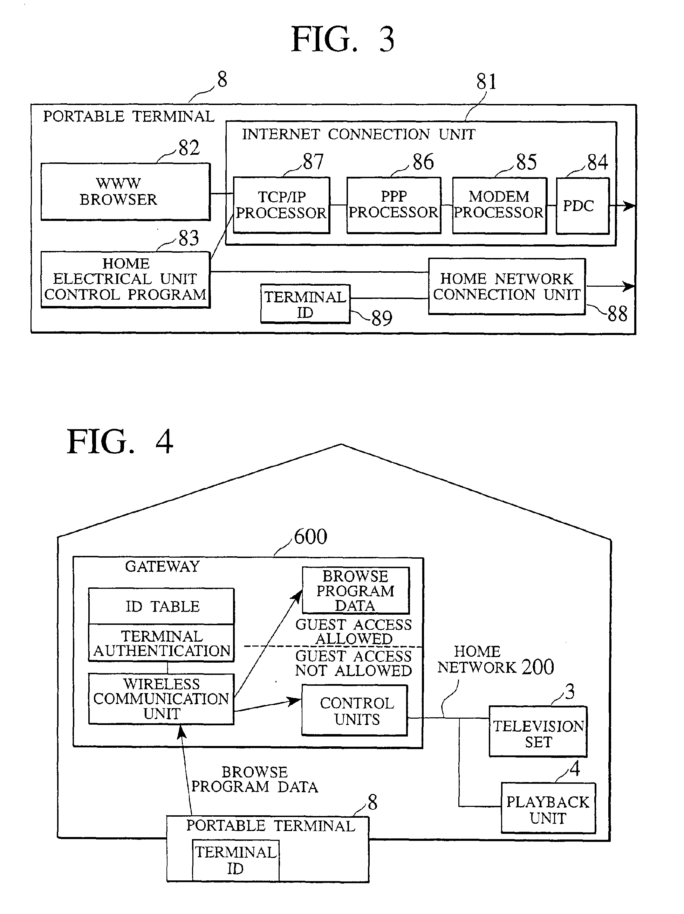

FIG.3 shows the configuration of the portable terminal 8. The portable terminal 8 contains a home network connection unit 88 which has the function to connect to the home network 2 via a wireless communication such as Bluetooth, an Internet connection unit 81 which has the function to connect to the Internet 7, a WWW browser function 82, and a home electrical unit control program 83.

The portable terminal 8 may be connected to the home network 2 from a location in or away from the home 1 via the gateway 6. When the portable terminal 8 is used in the home 1, the home network connection unit 88 communicates with the gateway 6 via wireless transmission such as Bluetooth. While this communication is made, the portable terminal 8 recognizes that it is being used in the home 1 and establishes a bi-directional data transmission between the home network connection unit 88 and the gateway 6. This communication includes an authentication procedure in which a terminal ID 89 of the portable terminal 8 is sent to the gateway 6 to allow gateway 6 to compare the ID with the terminal ID pre-registered therein. This procedure prevents an unauthorized portable terminal from browsing and ensures increased security.

In this state, the user can use the home electrical unit control program of the portable terminal 8 to send control commands for operating the units such as television set 3 and the playback unit 4 connected to the home network 2. In this case, with the use of the WWW browser function 82 of the portable terminal 8, the user can display the operation screen data (HTML data) sent by the WWW server function contained in a controllable unit as described above. This enables the user to remotely control the unit, for example, from a room next to the room in which the unit is installed as if he or she was right in front of the unit. In addition, the user can use the WWW browser function 82 to display contents data played back by the playback unit 4 and execute the playback/rewind, fast forward, and pause operation. The user can also directly access desired data on the recording medium or rewind the recording medium even if he or she is remote from the controllable unit.

Similarly, program data or contents data accumulated in the gateway 6 is available for browsing. The home electrical unit control program 83 in the portable terminal 8 may also be used to send control commands (control data) to the home network 2 to operate home electrical units such as the television set 3 or the video tape recorder 4 connected to the home network 2.

The home electrical unit control program 83 is pre-installed in the portable terminal 8 as described above. However, if the WWW server is contained in a controllable unit, control data, such as HTML data or JAVA programs, may be downloaded into the portable terminal 8 for use as control data for controlling a controllable unit.

The portable terminal 8 with the home electrical unit control program 83 may also have the download data capture function. The terminal with this configuration can control, with the use of downloaded control data, a controllable unit which cannot be controlled by the home electrical unit control program 83.

The configuration described above allows the user to operate the television set 3 and watch a desired program while browsing program data or to operate the video tape recorder 4 and videotape a program while browsing program data, all from the same portable terminal 8. Thus, in the home 1, the user can remotely operate a controllable unit or browse contents even if the unit is located remotely. For example, the user may take the waterproofed portable terminal 8 to a bathroom and browse the contents.

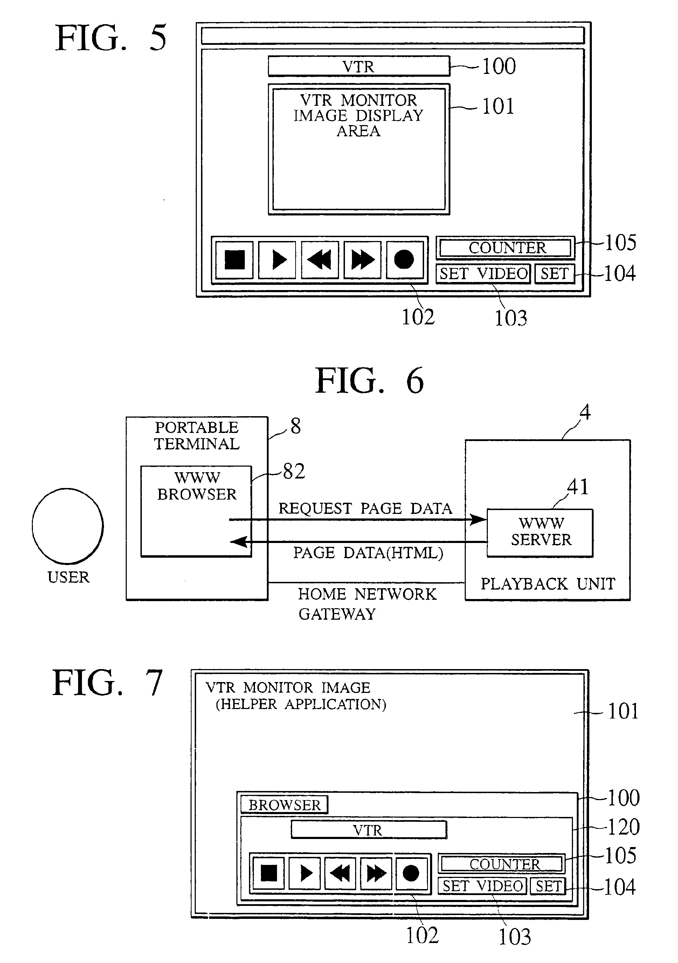

The following describes, more in detail, how control data is downloaded from the WWW server of a controllable unit into the portable terminal 8 for operating the playback unit 4. FIG.5 shows the screen displayed on the portable terminal 8 when control data is downloaded. FIG. 6 is a diagram showing data transferred between the portable terminal 8 and the playback unit 4. For convenience, the home network 2 and the gateway 6 are simplified in FIG.6.

First, when the WWW browser 82 of the portable terminal 8 accesses the playback unit 4 with a predetermined address specified, the screen such as the one shown in FIG.5 is displayed. That is, upon receiving a request (page data request) from the WWW browser 82, a WWW server 41 in the playback unit 4 sends HTML-written page data in response to this request for controlling the playback unit 4 and displays the data on the screen of the portable terminal 8.

The screen shown in FIG.5 contains the following components: an operation target display 100 which indicates that operation will be performed on the playback unit 4, a monitor image display area 101 in which an input to, or played-back image from, the playback unit 4 is displayed, an operation button group 102 composed of operation buttons for controlling the operation of the playback unit 4 such as recording, playback, or fast-forwarding, a Set Video button 103 for moving to the video setting screen, a set button 104 for moving to the setting screen, and a counter 105. With the mouse or remote controller, the user can specify these buttons 102-104 to operate the playback unit 4 as if he or she was directly operating the playback unit 4.

In FIG.5, the image output from the playback unit 4 is displayed in the monitor image display area 101 with the operation buttons 102, 103, and 104 below it for controlling the playback unit 4. And, a pseudo moving image is displayed in the monitor image display area 101 by continuously sending GIF- or JPEG-compressed still images from the playback unit 4 which acts as the WWW server. When a moving image transmission method is supported on the home network 2 by a procedure other than HTTP or when a moving image may be transmitted between units via a normal video cable in parallel with the home network 2, the moving image displayed on the playback unit 4 may be displayed directly in the monitor image display area. Therefore, as shown in FIG.7, a moving image from the playback unit 4 is displayed in the entire area with other data superimposed on the moving image as a browse screen 120. This screen layout increases system operability.

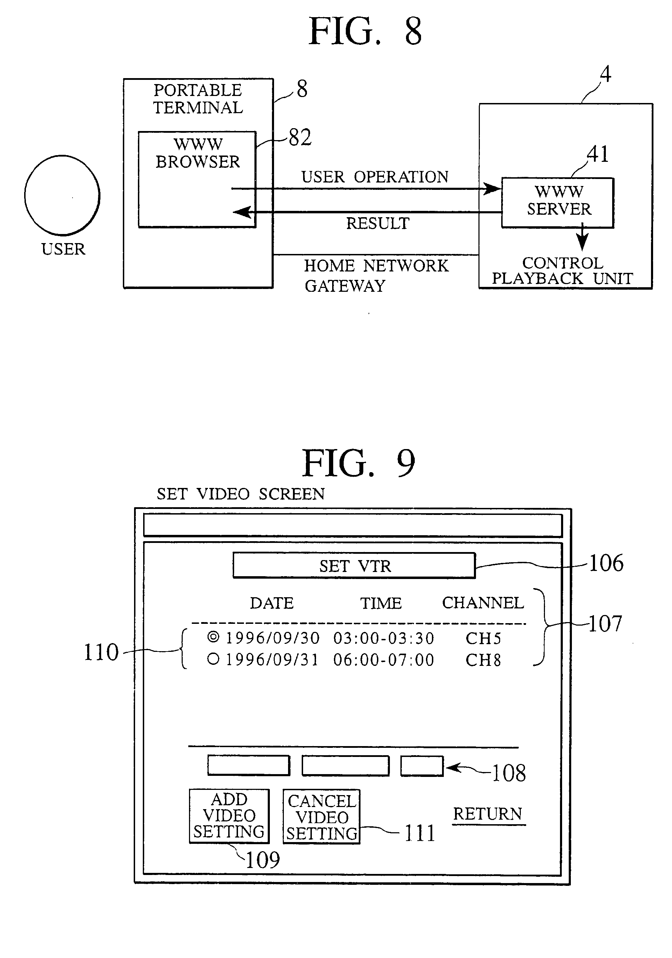

When a user executing the WWW browser 82 on the portable terminal 8 selects one of the operation buttons 102, 103, and 104 with the use of an input mean such as a mouse, the operation instruction given by the user is sent to the WWW server 41 of the playback unit 4 as shown in FIG.8. The WWW server 41 of the playback unit 4 receives the user-specified operation instruction to control the mechanism of the playback unit 4 for executing the instruction. The result of the operation is sent back to the portable terminal 8 for display on the screen.

In this case, the user-specified operation instruction is sent to the WWW server 41 of the playback unit 4 with the POST method (which passes data) provided by HTTP. As a result of POST, new page data is sent from the WWW server 41 of the playback unit 4 to the WWW browser 82 of the portable terminal 8 with the result that the entire screen of the WWW browser 82 is re-drawn. To prevent the screen from being re-drawn and to accomplish a sophisticated interaction with the user, a Java-coded program executable on the WWW browser 82 may be built in page data to send user instructions to the WWW server 41.

Next, the following describes how the playback unit 4 is set from the portable terminal 8. Selecting the Set Video button 103 on the operation screen shown in FIG.5 or FIG.7 displays the screen shown in FIG.9 on the portable terminal 8. This screen allows the user to set the playback unit 4 to go on at a specified time. FIG.9 shows a screen for setting the playback unit 4. A title display 106 at the top of the screen indicates that the screen is the video setting screen of the playback unit 4 with a current video setting list 107 below it. At the bottom of this screen is a video setting entry field 108. The user can type a start day, start time and end time, and channel number in this field 108. Then, the user can select an Add Video Setting button 109 to add a video setting.

At the left end of the current video setting list 107 is provided a radio button 110 for each video setting (each line). For a line containing a video setting not required any more, the user can select the radio button 110 of the line and select a Cancel Video Setting button 111 to delete the setting.

Displaying program data accumulated in the gateway 6 instead of the current video setting list 107 allows the user to set a video while referencing program data such as a program list. This configuration further increases operability.

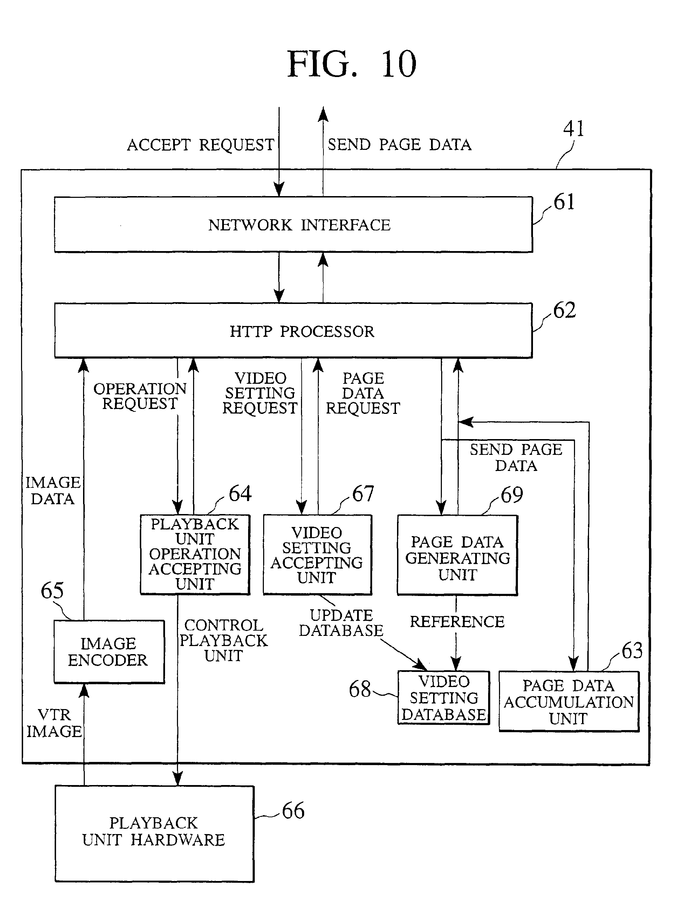

FIG.10 shows an example configuration of the WWW server 41 in the playback unit 4. The WWW server 41 shown in FIG.10 comprises a network interface 61 which communicates with the WWW browser 82, an HTTP processor 62 which is connected to the network interface 61, accepts a request from the WWW browser 82, and sends HTML-written page data, a page data accumulation unit 63 which contains page data for controlling the playback unit 4 with the WWW browser 82, a playback unit operation accepting unit 64 which, when the user operates the playback unit 4 via the WWW browser, accepts an operation request and then controls hardware 66 of the playback unit 4, a TV image encoder 65 which captures (accumulates data temporarily) image data supplied from the playback unit hardware 66, coverts the captured data to GIF/JPEG still image data, and outputs the converted data to the program data accumulation unit 62, a video setting accepting unit 67 which sets the video, a video setting database 68 which contains video setting data that have been issued, and a page data generating unit 69 which creates page data during video setting.

When the network interface 61 of the WWW server 41 with this configuration accepts a request from the WWW browser 82 of the portable terminal 8, the network interface 61 passes the request to the HTTP processor 62. The HTTP processor 62 accepts page data from the page data accumulation unit 63 according to the contents of the request, accepts still image data from the image encoder 65, inserts the accepted data into the page data, and outputs the data to the network interface 61. The network interface 61 outputs the page data, such as the one shown in FIG.5 or FIG.7, to the WWW browser 82 of the portable terminal 8 from which the request was issued.

When the user operates the playback unit 4 from the WWW browser 82, the operation instruction is supplied to the HTTP processor 62 via the network interface 61. The instruction is then output to the playback unit operation accepting unit 64 as an operation request. The playback unit operation accepting unit 64 executes the requested instruction for the playback unit hardware 66 and outputs the result to the HTTP processor 62. Then, the processing result is output to the WWW browser 82 via the network interface 61. In addition, when the user selects the Set Video button 103 while the screen in FIG.5 or FIG.7 is displayed on the WWW browser screen, the information about this operation is supplied to the HTTP processor 62 via the network interface 61 for output to a page data generating unit 69. The page data generating unit 69 references the video setting database 68, generates page data, such as the one shown in FIG.9 which indicates the current video setting, and outputs the generated page data to the HTTP processor 62. The page data is then output to the WWW browser 82 via the network interface 61.

After that, when the user types a date and a channel number in the video setting entry field 108 shown in FIG.9 and selects the Add Video Setting button 109, the entered data is sent to the HTTP processor 62 via the network interface 61 and then output to the video setting accepting unit 67. The video setting accepting unit 67 writes the accepted data into the video setting database 68 to update it. Video setting data is deleted from the database in the same way. After the database is updated and information indicating that updating is completed is output to the HTTP processor 62, the HTTP processor 62 requests the page data generating unit 69 to generate page data indicating the new setting. The page data generating unit 69 references the video setting database 68, generates page data indicating the new setting, and sends the generated data to the HTTP processor 62. The page data is then output to the WWW browser 82 via the network interface 61.

As described above, because the user can control home electronic units exactly the same way the user connects to the Internet for visiting an external web page, anybody can operate the units easily. The user can also use information from external home pages for operating home electronic units. Even if a plurality of electronic units of the same type, for example two playback units, are connected, they may be operated individually because each has its own address.

In addition, new controllable electronic units, if added, may be controlled simply by adding addresses. Even if an electronic unit with a new function is connected in future, information about the new function is supplied from the WWW server built in the added electronic unit to other electronic units as page data. Therefore, it is possible for an already-connected electronic unit with the WWW browser function, such as the portable terminal 8, to operate the new electronic unit.

The user can also perform these operations via the Internet 7 by connecting the portable terminal 8 to the gateway 6 through the Internet connection unit 81. In this case, the portable terminal 8 need not be connected to the home network 2 but may be used away from home. Upon detecting that communication with the gateway 6 is disconnected, the portable terminal 8 finds that it is used away from the home 1 and changes connection with the gateway 6 from a direct connection to an indirect connection via the Internet. Connection to the Internet 7 is established as follows. After a PDC 84 establishes a switched line connection, a connection with an ISP (Internet Service Provider) is made through a modem processor 85, a PPP processor 86, and a TCP/IP processor 87. After that, the communication path to the gateway 6 installed in the home is established through the TCP/IP protocol.

Once the connection with the Internet 7 is made, the WWW browser function 82 in the portable terminal 8 allows the user to browse the WWW on the Internet 7. As the Internet becomes popular, a user's need for browsing the WWW away from home has arisen. A need has also arisen for controlling home electrical units both at home and away from home. The portable terminal 8 satisfies this need with one terminal.

FIG.4 shows a configuration in which the portable terminal 8 is connected to a home network 200 which is a network other than the home network 2 to which the portable terminal 8 belongs. As shown in FIG.3, the home network connection unit 88 in the portable terminal 8 constantly checks, via a wireless communication, if there is a home network (2 in FIG.1 or 200 in FIG.4), that is, a gateway (6 in FIG.1 or 600 in FIG.4), near to the terminal. If such a network is found, the terminal issues a request to connect to the home network (2 in FIG.1 or 200 in FIG.4). In response to the connection request from the portable terminal 8, the gateway (6 in FIG.1 or 600 in FIG.4) authenticates the terminal. A terminal has its own ID code 89. During terminal authentication, the ID code 89 is compared with an entry in the ID table in the gateway (6 in FIG.1 or 600 in FIG.4) to check if they match. If there is a match between the terminal ID 89 and an entry in the ID table in the gateway, the portable terminal 8 is authenticated that it is a member of the home network (2 in FIG.1 or 200 in FIG.4). Then, with the use of the portable terminal 8, the user may use all functions including the program data browse function and the unit control function via the gateway (6 in FIG.1 or 600 in FIG.4). However, if authentication fails, the portable terminal 8 is connected with the home network, not as a member of the home network (2 in FIG.1 or 200 in FIG.4) but as a guest. In this case, the gateway (6 in FIG.1 or 600 in FIG.4) makes available only the predefined functions. For example, in FIG.4, the user may browse program data but may not control the units in the home.

Limiting the functions available to the user according to whether the portable terminal 8 is amember or a guest ensures security of important services such as a change in the setting data on the home electrical units while providing the user with any service the user wants even when he or she is away from home with the portable terminal 8. This function is applicable to the services not only in the home but also in various installations outside the home.

As described above, the system according to the present invention allows the user to control the controllable units connected to a home network and to browse program data and contents data accumulated in the controllable unit or in the gateway. Thus, even when the user is away from home, the system makes the user feel that he or she is at home, thus providing high operability.

It should be understood that many modifications and adaptations of the invention will become apparent to those skilled in the art and it is intended to encompass such obvious modifications and changes in the scope of the claims appended hereto.

## Claims

1. A control data system comprising:
a home network (2);
at least one controllable unit (3, 4) connected to said home network (2) and remotely controlled by control data transmitted via said home network (2);
a gateway (6) at least comprising:
a connection unit (61) connecting said home network (2) to the Internet (7);
a forwarding unit (63) forwarding externally-supplied data to said home network (2); and
a first home network connection unit (64, 65) communicating data via a wireless data communication line; and
a portable terminal (8) comprising:
a second home network connection unit (88) for wireless data communication with said first home network connection unit (64, 65);
a control data transmission function (83) for transmitting control data for controlling said controllable unit; and
a browse function (82) for browsing HTML data transmitted from said gateway (6),
wherein said control data and said HTML data are transmitted via said wireless data communication line when the data communication is established between said first home network connection unit (64, 65) and said second home network connection unit (88) or via said Internet (7) when the data communication is not established between said first home network connection unit (64, 65) and said second home network connection unit (88).

2. The control data system according to claim 1 wherein said gateway (6) further comprises accumulation means (62) for accumulating externally-supplied program data or contents and wherein said portable terminal (8) browses HTML data on the program data or contents accumulated in said accumulation means (62) via said home network (2) or said Internet (7) for controlling said controllable unit with the control data.

3. The control data system according to claim 1 wherein said portable terminal (8) has a function for monitoring a presence of a nearby gateway (6) via wireless communication and, when said portable terminal (8) requests a connection to said gateway (6) in which said portable terminal (8) is not registered as a format user, said gateway (6) allows said portable terminal (8) to connect to the home network (2) as a guest which may execute only limited services.

4. The control data system according to claim 1 wherein said controllable unit (3, 4) has a WWW server function transmitting control code for controlling operation and wherein said portable terminal (8) has a control data transmission function transmitting control data for controlling the controllable unit (3, 4) based on the control code received from the WWW server function.

5. A method for transmitting control data among at least one controllable unit (3, 4), a gateway (6), and a portable terminal (8) interconnected via a home network (2), wherein control data for controlling said controllable unit (3, 4) is transmitted, and HTML data from said gateway (6) is browsed, either via wireless data communication line when data communication is established between said gateway (6) and said portable terminal (8) or via said Internet (7) in a location where data communication is not established between said gateway (6) and said portable terminal (8).
